# EUROPEAN PATENT SPECIFICATION

(11) **EP 4 188 068 B1**
(45) Date of publication and mention of the grant of the patent: **11.03.2026**
(21) Application number: 21773702.2
(22) Date of filing: 02.09.2021
(51) Int. Cl.: A01F 15/07

(54) **ROUND BALER**
RUNDBALLENPRESSE
PRESSE À BALLE RONDE

(30) Priority: 03.09.2020 GB 202013826; 02.07.2021 GB 202109589
(43) Date of publication of application: 07.06.2023
(73) Proprietor: Kuhn-Geldrop B.V., 5667 KP Geldrop (NL)
(72) Inventor: VAN DEN HURK, Nick Franciscus Johannes, 5384 ST Heesch (NL); VAN DEN BOOMEN, Benny Petrus Lambertus Martinus, 5595 GC Leenderstrijp (NL)
(74) Representative: Murgitroyd & Company
(86) International application number: PCT/EP2021/074233
(87) International publication number: WO 2022/049180

(56) References cited:
- EP-A1- 1 716 745
- EP-A1- 3 235 366
- EP-A1- 3 300 585
- EP-A2- 2 769 615
- GB-A- 2 475 849
- US-A- 5 581 973

## Description

The present invention relates to a round baler having a binding apparatus for applying a binding material to a cylindrical surface of a bale formed in the bale chamber of the baler.

A binding apparatus for a baler has a cycle of operation in which the leading end of the binding material is presented to the outer surface of the bale when the bale has reached a desired size or pressure, the binding material is wrapped at least once around the bale, and the supply of binding material from the apparatus to the bale is severed when the required binding of the bale has been completed.

It is known to provide devices for applying binding material, such as film or netting, to the outer surface of the bale, which enter the binding material into the bale chamber in which the compressed bale is formed. The binding material is used to bind the bale to prevent expansion of the compressed material after the bale is ejected from the bale chamber.

An apparatus for applying a binding material to the outer surface of an agricultural bale is described in EP1776860A1. This apparatus has a cycle of operation in which the leading end of the binding material is presented to the outer surface of the bale when the bale has reached a required size, the binding material is wrapped at least once around the bale (typically 2-3 times for netting or 4-5 times for film), and the supply of binding material from the apparatus to the bale is severed when the required binding of the bale has been completed. The apparatus comprises a support for a supply reel of binding material, such as netting, a pull-off device that draws binding material from the supply reel, and a feed mouth that feeds and guides the binding material to the outer surface of the bale. The feed mouth is moveable between an operative feeding position near to the outer surface of the bale where the binding material is presented by the feed mouth to the outer surface of the bale, and a retracted position which the feed mouth takes up when binding has been completed so that the supply of binding material can be severed.

This type of feeding system is generally reliable when netting material is used as the binding material. Once the bale has been bound, it can be ejected from the bale chamber and in the case of silage it may be subsequently wrapped with a stretch film material.

Lately, the demand for silage bales that are bound with film instead of net binding material has increased, owing to the fact that when such bales are subsequently wrapped with stretch film for full coverage only one type of material is used for both binding and wrapping of the bale. Then, when the bale is to be used as silage, the film binding material and the film wrapping can be peeled off in one operation and can be more easily disposed of or recycled.

Simply replacing the net binding material with film binding material on this kind of feeding device will however lead to reliability problems. Especially, the correct feeding of the film binding material into the bale chamber cannot be reliably ensured owing to the fact that film is more slippery than net binding material and cannot be gripped so easily between the bale and the press roller at the start of the binding operation. As a result, the leading end of the film, called the tongue, that extends from the feed mouth can slip over the rollers, and/or between the rollers and the bale, with the result that the film will not be caught and pulled off the reel.

Further, as film is more flexible than net binding material, the tongue tends to hang straight down when it comes out of the feeding mouth, so that the roller below the entry point of the binding material cannot then grip the tongue and cannot transport the film binding material into the bale chamber.

Because film binding material needs to be pre-stretched before it is entered into the bale chamber (to provide a tight binding on the bale), when the film is severed the length of the tongue hanging out of the feed mouth will decrease as the stretched film contracts after severing. This decrease of the tongue length will vary depending on the type of the film, the stretch ratio, the working speed and the environmental conditions. This will result in a variation in the length of the tongue, which will exacerbate the problems described above.

In particular, if the tongue extending from the feed mouth is too short, it will not be possible for the bale and the press rollers to gain a sufficient grip on the tongue, and the film binding material will not then be pulled from the reel. On the other hand, an excessively long tongue may be difficult to enter precisely into the bale chamber as the long tongue will be bent by the roller and the roller will not be able to transport the tongue into the bale chamber.

The aforesaid problems, resulting from a variation in the length of the tongue that extends from the feed mouth, may also be present when net binding material is used. Therefore, providing control over the length of the tongue, and optionally being able to adjust that length, is desirable both for film binding material and for net binding material.

Further problems can arise with regard to the precise positioning of the tongue as it is fed through the feed opening into the bale chamber. The positioning of the tongue can be disturbed by a number of different factors.

One factor that affects the positioning of the tongue in the feed opening results from the fact that the film material is coated on one side with a tack substance that allows it to adhere to layers of film binding material that have already been applied to the bale during the binding process. This coating can cause the tongue to curl upwards, downwards or in other directions due to non-uniform stretching characteristics across the thickness of the film. This curling of the tongue can be affected by the type or brand of film used or the conditions at the time of baling and is not completely predictable. Excessive upwards curling can bring the tongue into contact with the upper press element (roller or belt) that is located above the feed opening. As this press element rotates outwards the tongue can be pushed outwards, preventing it from entering the bale chamber and causing the binding operation to fail. Alternatively, excessive downwards curling can bring the tongue into contact prematurely with the lower press roller located below the feed opening. Although the lower press roller rotates inwards towards the bale chamber, if it is contacted too early by the tongue the impact with the roller can flick the tongue upwards into contact with the upper feed roller, causing the problems described above.

Another factor that affects the positioning of the tongue in the feed opening results from the fact in certain circumstances a considerable quantity of debris bale material (grass, straw etc.) can be thrown out of the bale chamber through the feed opening. This can happen particularly for example when the bale material is very dry. Although this debris bale material is generally caught by the pick-up device and returned to the bale chamber through the crop mouth, the outward flow of bale material can push the tongue away from the feed opening so that the binding material is not then fed into the bale chamber, causing the binding operation to fail. This problem can arise with both film and net binding materials.

EP 3 300 585 A1 discloses a round baler comprising a feeding beak and a feeding roller for supplying a wrapping material into the feed nip of the bale chamber. To ensure a particularly reliable feeding of the wrapping material the beak comprises a pair of flexible guide strips between which the wrapping material is guided through for an optimum guidance. The flexible guide strips are arranged at the same distance from one another with respect to the width of the wrapping material, thus, allowing the guide strips with the wrapping material there between to slide along a guide surface until they arrive on the surface of the guide roller.

Other known balers are disclosed in US5581973; EP3235366; EP1716745; EP2769615; and GB2475849.

It is an object of the present invention to provide a round baler that mitigates one or more of the aforementioned problems.

According to one aspect of the present invention there is provided a round baler as defined by any one of the claims.

The baler comprises at least one control element that is configured to control the position of the tongue as it is fed through the feed opening into the bale chamber, thus ensuring reliable binding of the bale.

The at least one control element comprises a flexible curtain attached to the feed device, which is configured to be drawn at least partially into the feed opening with the tongue. This ensures correct feeding of the tongue, particularly when the tongue is highly flexible, for example when film binding material is used. The flexible curtain may for example be made of a resilient material, for example a PVC-coated or rubber-coated fabric.

Optionally, the curtain has a length between a free edge and an attached edge thereof such that the free edge of the curtain does not extend beyond the front edge of the feed device. This allows the curtain to be drawn into the feed opening without any risk of it contacting the surface of the bale.

Optionally, the curtain includes at least one longer portion with a length L1 between the front edge and the rear edge thereof, and at least one shorter portion with a length L2 between the front edge and the rear edge thereof, where L2 < L1. With this arrangement, the shorter portion with length L2 may be drawn into the feed opening first by rotation of a drive roller adjacent the feed opening. The shorter portion then pulls the longer portion with length L1 into the feed opening, which in turn draws the tongue of binding material into the feed opening and into contact with the bale surface in a controlled manner.

Optionally, the curtain includes at least one split in a free edge of the curtain which extends in the length direction of the curtain from the free edge towards the attached edge, wherein said at least one split is located at a junction between a longer portion and a shorter portion. The split allows the shorter portion to be drawn partially into the feed opening before it draws in the longer portion, ensuring reliable feeding.

Optionally, the at least one control element comprises a conditioner element that is configured to engage and straighten the tongue as the feed mouth moves towards the feed opening.

Optionally, the at least one control element comprises a shield that partially surrounds a press roller located adjacent and below the feed opening, wherein the shield is configured to prevent the tongue from engaging at least a portion of the circumference of the press roller.

Optionally, the shield surrounds at least an outer, lower part of the circumference of the press roller.

Optionally, an upper edge of the shield is located between the upper periphery of the press roller and the rotational axis of the press roller.

Optionally, the at least one control element comprises a flexible conditioner member that engages the binding material between the cutter device and the feed device when the feed device is in the retracted position, wherein the flexible conditioner member is configured to control movement of the tongue towards the feed device when the binding material is cut.

Optionally, the flexible conditioner member comprises a resilient material.

Optionally, the at least one control element comprises a resilient support element attached to the feed device between the front and rear edges thereof, which is configured to engage a press roller located adjacent the feed opening when the feed device is in the feed position.

Optionally, the resilient support element is configured to press the binding material against the press roller when the feed device is in the feed position.

Optionally, the resilient support element is configured to press the flexible curtain against the press roller when the feed device is in the feed position.

Optionally, the binding material comprises film binding material.

Optionally, the binding apparatus includes a bundling device that is configured to bundle the binding material before the binding material is cut. Optionally, the bundling device is configured so that after the binding material is cut, a cut end of bundled binding material forms a tongue that extends from the feed mouth. Optionally, the tongue has a width less than the width of the unbundled binding material.

Optionally, the feed mechanism includes a pull-off device that is configured to draw binding material from the supply. The pull-off device may for example consist of an actively driven roller, or some other driven element. The provision of a pull-off device can reduce the risk of the binding material tearing, which may be important with film binding material, and it can help with feeding of the tongue into the bale chamber to ensure that it is captured by the rotating bale.

The feed device includes first and second feed elements that are configured to grip opposite sides of the binding material.

Certain embodiments of the present invention will now be described, by way of example, with reference to the accompanying drawings, in which:
Figure 1 is an isometric view of a baler according to an embodiment of the invention, showing the front and left-hand sides;
Figure 2 is an isometric view of part of the baler with its external covers removed, showing the front and right-hand side;
Figure 3 is an isometric view of part of the baler with its external covers removed, showing the front and left-hand side;
Figures 4-8 are side views showing components of a binding apparatus according to a first embodiment of the invention in various operational positions;
Figures 9-14 are enlarged side views showing components of a feed device according to the first embodiment of the invention in various operational positions;
Figure 15 is a front view of a flexible curtain, comprising a component of the binding apparatus according to the first embodiment of the invention;

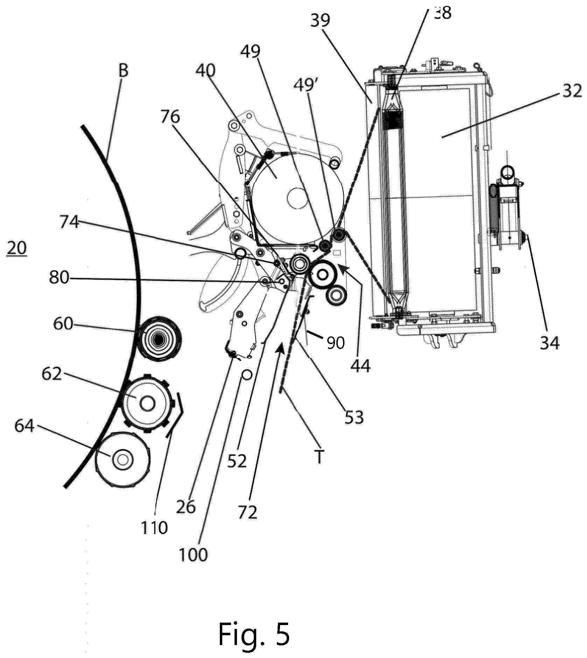

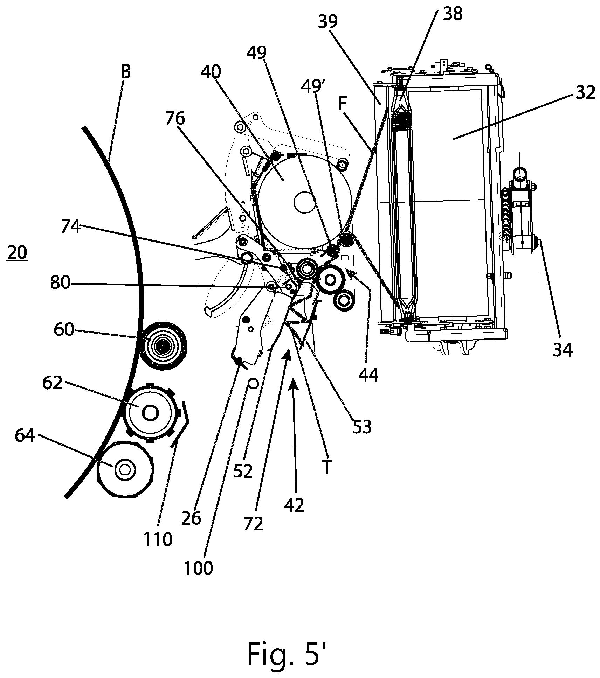

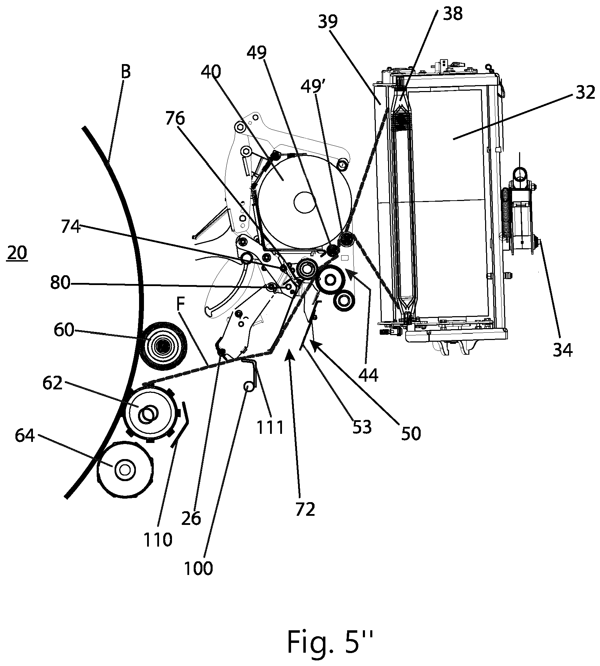

Figure 5' is a side view showing a binding apparatus according to the first embodiment of the invention, illustrating a problem that may potentially arise during feeding of the binding material;
Figures 5", 6', 7' and 8' are side views showing components of a binding apparatus according to a second embodiment of the invention in various operational positions, and

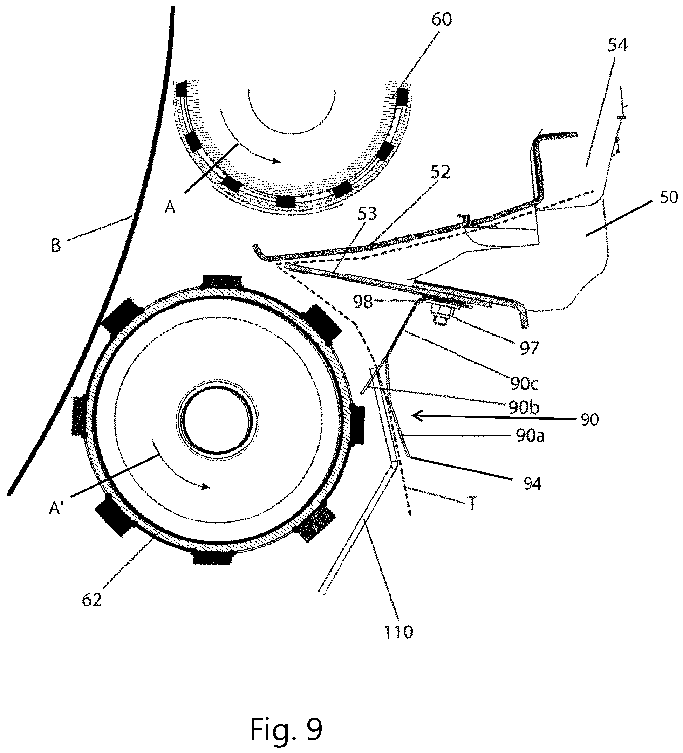

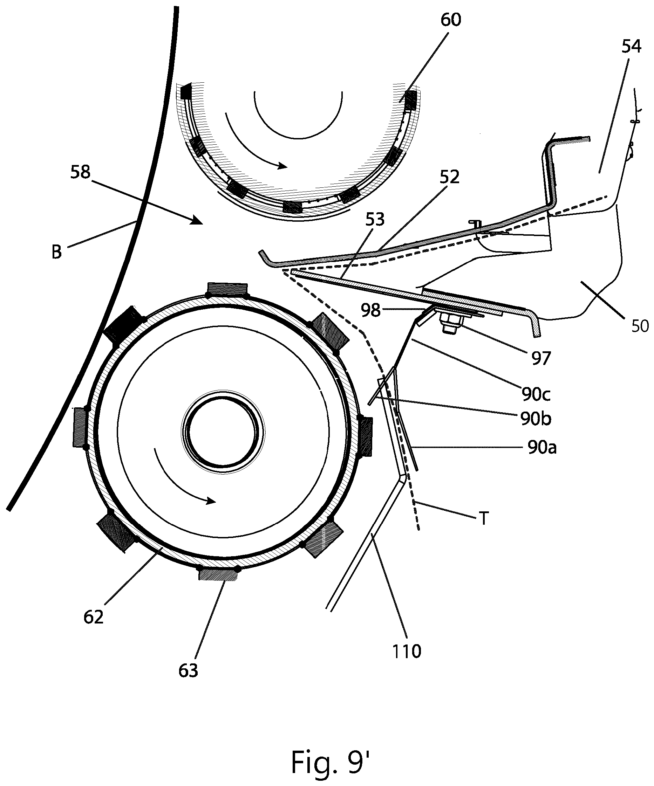

Figures 9', 10' and 12' are enlarged side views showing components of a feed device according to a third embodiment of the invention in various operational positions.

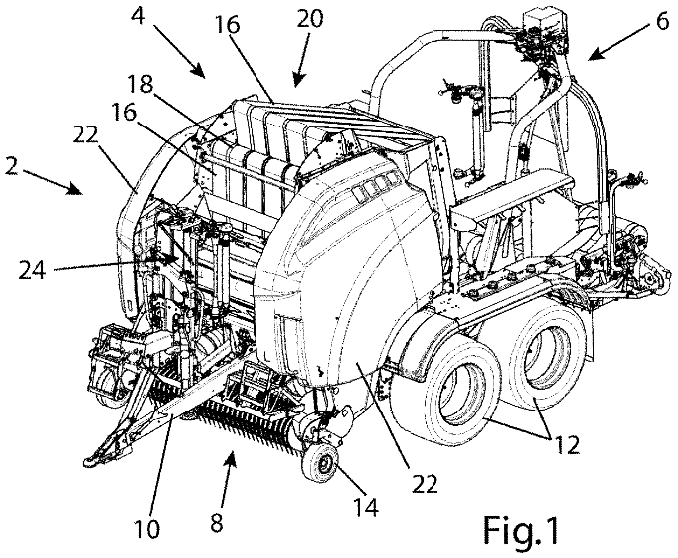

Figure 1 illustrates the main components of a round baler 2 according to an embodiment of the invention. The baler 2 may be of the variable chamber type or the fixed chamber type.

In this embodiment the baler 2 is a combined baler/wrapper machine, which includes a front section 4 where a bale is formed from bale material, and a rear section 6 where the bale is wrapped with a stretch film wrapping material. It should be noted that the invention is also applicable to balers that do not include an integrated wrapper section. In that case, bales formed by the baler 2 may optionally be wrapped subsequently using a separate wrapping machine as is well known in the art. It should also be noted that the wrapper comprising the rear section 6 may take alternative forms, as are known in the art. The wrapper illustrated is of a conventional orbital type and will not be further described.

The baler 2, which in this embodiment is of the variable chamber type, includes a pick-up device 8 for picking up bale material, for example cut straw or grass, from the ground, a drawbar 10 for attaching the baler to a tractor, support wheels 12, 14 and a plurality of press elements comprising elongate belts 16 that are guided around a set of rollers 18, 60 and/or driven press rollers 56, 62, 64. The belts 16 together with a pair of side plates (not shown) create a cylindrical bale chamber 20 in which a round bale can be formed. The pick-up device 8 is configured to feed the bale material into the bale chamber 20 through a crop mouth 21. The sides of the baler 2 are covered by covers 22. The baler may be driven, for example, via the power take off (PTO) of the tractor. Again, these components are conventional and will not be further described.

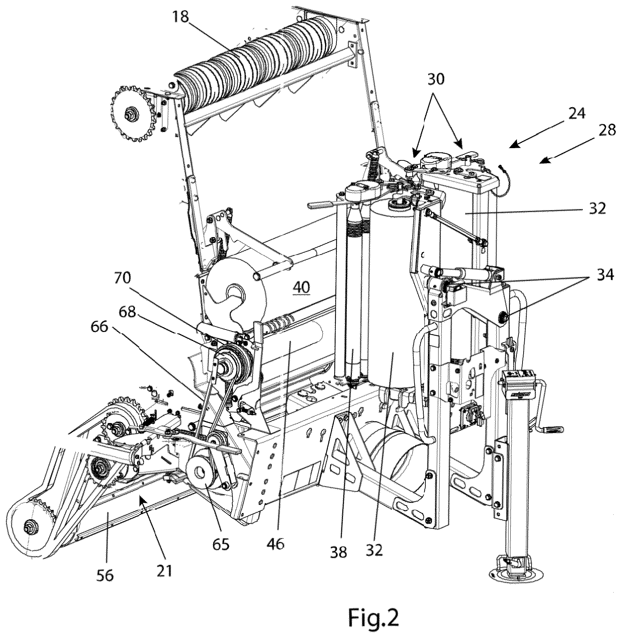

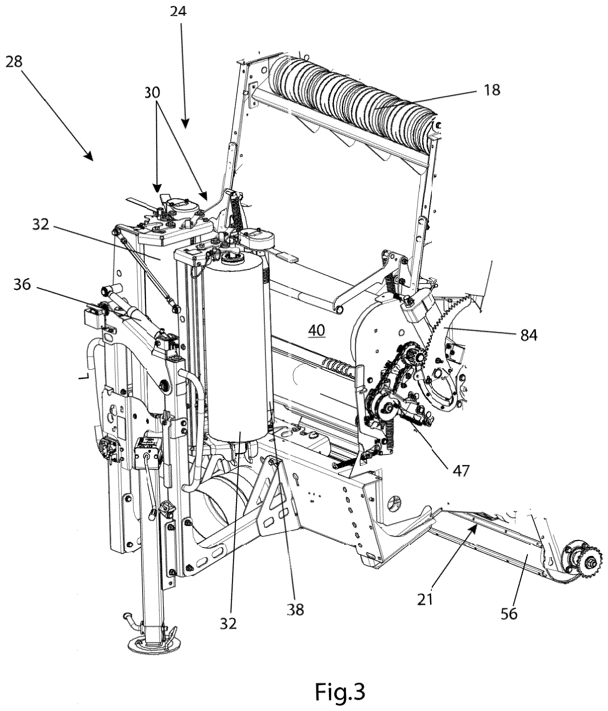

The baler also includes a binding apparatus 24 that is configured to apply a binding material, optionally a film binding material, to a cylindrical surface of the bale formed in the bale chamber to bind the bale, and a cutter device 26 that is configured to cut the binding material after the bale has been bound. Additional components of the baler are shown in figures 2 and 3, which show the internal mechanism of the baler with the covers 22 and belts 16 removed.

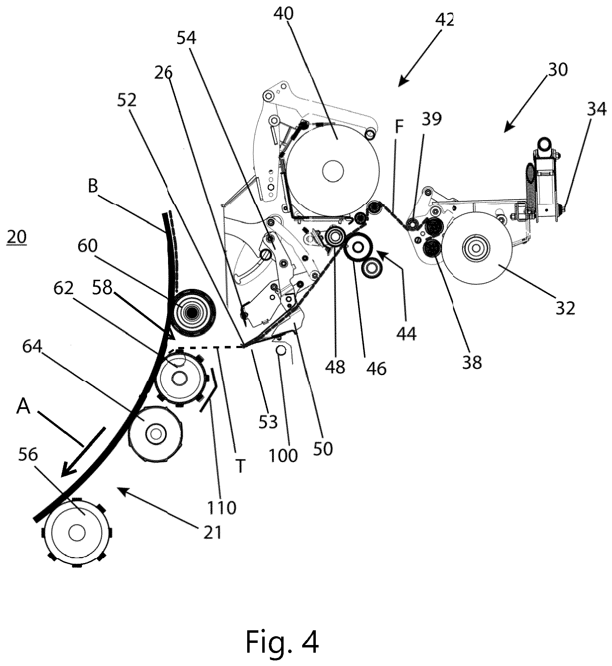

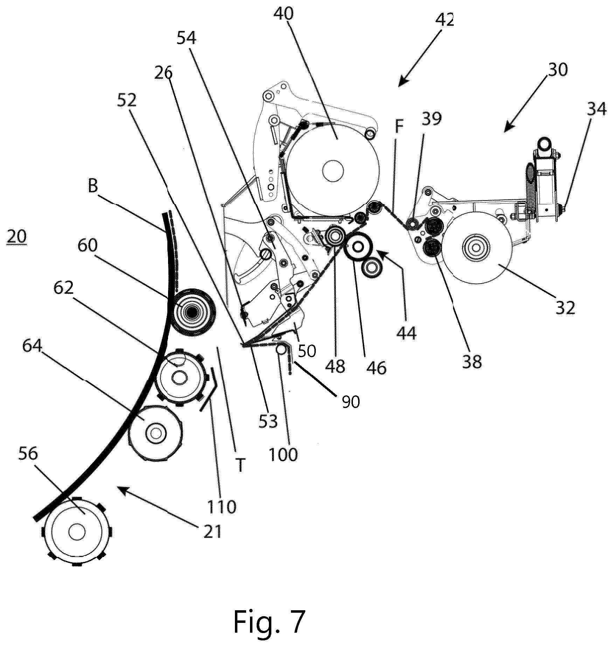

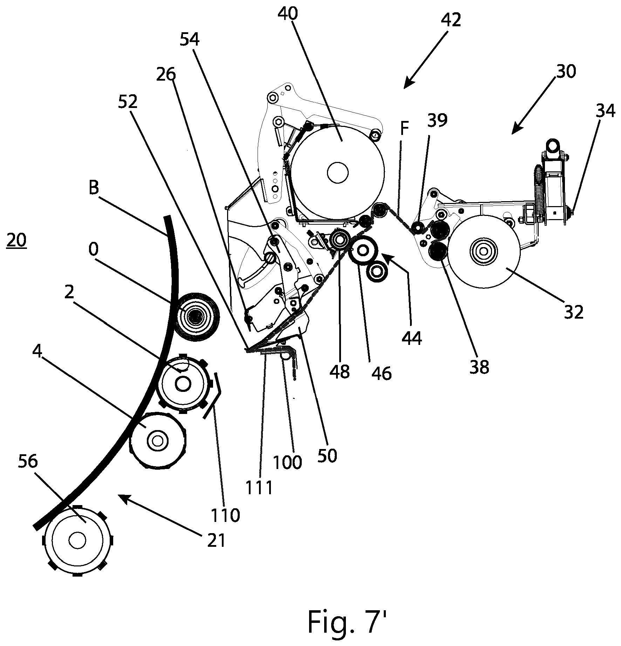

The binding apparatus 24 includes a supply device 28 for a supply 32 of film binding material. In this embodiment the supply 32 comprises two reels of film binding material, each reel being mounted on a separate support 30. In this embodiment the supports 30 are each mounted on a pivot 34 which allows the support and the associated reel to pivot through 90 degrees from a vertical bundling position shown in figures 2, 3, 5, 6 and 8 to a horizontal binding position shown in figures 4 and 7 (compare figures 4 and 5). An actuator 36 is provided to drive rotation of the supports 30 and reels 32 between the vertical and horizontal positions. Alternatively, the reels may be mounted on a fixed supports so that they cannot be rotated to bundle the film binding material.

The supply device 28 also includes a pre-stretcher device 38 for stretching the film binding material lengthwise as it is drawn from the reel 32. The pre-stretcher device 38 is of a conventional kind, comprising two rollers that are driven at different circumferential speeds to stretch the film binding material lengthwise as it passes around the two rollers. A freely-rotating supply guide roller 39 located after the pre-stretcher device 38 also comprises part of the supply device 28.

In this embodiment, the baler also includes a reel 40 of net binding material, which can be used instead of the film binding material if, for operational reasons, the use of net binding material is preferred. The provision of a net binding system is optional.

Further features of the binding apparatus 24 can be seen in figures 4-8. The binding apparatus 24 comprises a feed mechanism 42 that supplies film binding material F from the supply 32 to the bale chamber 20. The feed mechanism 42 may optionally include a pull-off device 44 comprising at least one driven roller 46, which can be braked by an adjustable brake 47. The pull-off device 44 may also include a freely rotating pinch roller 48 that cooperates with the driven roller 46 to grip the film F as it passes through the pinch between the rollers 46, 48. Alternatively, the pinch roller 48 may be driven or it may be omitted. The film binding material F may optionally be guided from the supply device 28 to the feed mechanism 42 by first and second freely-rotating feed guide rollers 49, 49'.

The feed mechanism 42 includes a feed device 50 located after the pull-off device 44. In this embodiment the feed device 50 comprises a feed mouth with a pair of opposed feed elements, for example comprising upper and lower lips 52, 53 that can be pressed against one another to define a narrow slot through which the film binding material F passes or opened apart to provide a wider slot. The feed device 50 is mounted on an arm 54 that can pivot about a pivot point (not shown). An actuator (not shown) is provided for driving pivoting movement of the pivot arm 54 and the feed device 50.

Operation of the binding apparatus is illustrated in figures 4-8. Referring first to figure 4, this shows the configuration of the binding apparatus during binding of a round bale B in the bale chamber. The film binding material F is drawn from the supply reel 32 and passes around the pre-stretcher device 38, which stretches the film lengthwise. As the film is elastic this ensures that when the film is applied to the cylindrical surface of the bale B it is in tension so that it binds the bale tightly.

The film binding material F then passes along a feed path from the pre-stretcher device 38 to the surface of the bale B via a feed opening 58 in the bale chamber 20, which is located between a pair of adjacent press elements comprising, in this case, an idler roller 60 that supports the belts 16 if provided and a driven press roller 62. It should be noted that the feed opening 58 for the binding material is relatively narrow, having a width between the idler roller 60 and the press roller 62 of typically 25-50mm.

The feed opening 58 is located away from the crop mouth 21 through which bale materials are introduced into the bale chamber 20, which is located between a second press roller 64 and a third press roller 56 below the feed opening 58. The crop mouth 21 is also much wider than the feed opening 58, typically having a width of 300-400mm. The feed path along which the film binding material F is fed from the pre-stretcher device 38 to the surface of the bale B is defined by various components of the feed mechanism 42 including the pull-off device 44 and the feed device 50.

During binding of a bale, the bale B is rotated within the bale chamber 20 by the press elements, which may include belts and/or rollers. In the embodiment shown in figure 4 the bale B rotates in a clockwise direction indicated by arrow A and the press elements, which in this embodiment include both belts 16 and rollers (including the idler roller 60 and the driven press rollers 56, 62 and 64), rotate anti-clockwise. A tongue T of the film binding material F is fed into the bale chamber 20 through the feed opening 58, between the two adjacent press elements (idler roller 60 and press roller 62).

During binding of a bale B the film binding material F is drawn from the reel 32 primarily by rotation of the bale B within the bale chamber 20. The pull-off device 44 can also be driven during binding of the bale, for example from a drive pulley 65, via a drive belt 66 (see figure 2). The drive belt 66 passes around a driven pulley 68, which is connected to the driven roller 46 of the pull-off device 44 via a magnetic clutch 70. The magnetic clutch 70 includes a freewheel (not shown), which allows the driven roller 46 to rotate slower, but not faster, than the pulley 68 in the feeding direction. Therefore, the active drive to the driven roller 46 limits the maximum speed of the driven roller. The pull-off device 44 can be braked by the adjustable brake 47 after the binding material has been severed, to limit or prevent further driving of the binding material by inertia.

During binding of the bale with film binding material, the magnetic clutch 70 is engaged and the pull-off device 44 is driven to draw film binding material at a speed that is less than the circumferential speed of the bale B in the bale chamber 20. Typically, the pull-off device 44 may be driven at approximately 90% of the circumferential speed of the bale B. Because the drive speed of the pull-off device 44 is less than the speed at which the film binding material is drawn by the bale, the binding material will be stretched between the pull-off device and the bale, ensuring a tight binding. This stretching of the binding material is in addition to any pre-stretching that may have been applied by the pre-stretcher device 38. If net is used to bind the bale, the net binding material is normally drawn from the supply entirely by rotation of the bale without activating the pull-off device.

If the film binding material starts to tear during binding, the actively-driven pull-off device 44 will continue to rotate, to reduce the risk that the film binding material will tear across its full width. The pull-off device 44 is driven actively at this time by engaging the clutch 70.

During binding of the bale the feed device 50 is located in a binding position, which is approximately mid-way between the pull-off device 44 and the feed opening 58, where it serves to guide the film binding material F from the pull-off device to the feed opening.

It will be noted that during binding of the bale B the reel 32 is in the horizontal binding position and the axis of the reel 32 is substantially parallel to the axes of the feed guide rollers 49, 49', the axis of the pull-off device 44, the axes of the rollers 60-64 and longitudinal axis the cylindrical bale B. Therefore, there is no twisting of the plane of the film binding material F as it passes from the reel 32 to the surface of the bale B. This ensures that the film binding material F is spread to its full width as it is applied to the bale. Also, it should be noted that in this embodiment two strips of film binding material F are applied side by side to the cylindrical surface of the bale B to cover the width of the bale B. Alternatively, a single strip or more than two strips of film binding material F may be applied to bind the bale.

Once binding of the bale has been completed, the feed device 50 is retracted and the film binding material F is cut, so that the bound bale B can be ejected from the bale chamber 20. The configuration of the feed mechanism 42 after the film binding material F has been cut is illustrated in figure 5.

It should be noted that in this embodiment the reels 32 of film binding material F have been rotated through 90 degrees from the horizontal binding position shown in figure 4 to the vertical bundling position, in which the axis of the supply guide roller 39 is perpendicular to the axes of the feed guide rollers 49, 49'. As a result, the film binding material F is gathered together to form a narrow strip of bundled film binding material as it passes over the feed guide rollers 49, 49'. The bundled strip of film binding material typically has a width of only 10-15mm, compared to a width of typically 650mm for the unbundled film binding material. Bundling of the film is optional and may be omitted if not required.

The bundled strip of film binding material then passes through the pull-off device 44 and into the feed device 50. When the feed device 50 is in the fully retracted position it adopts an open configuration as shown in figure 5, where the two lips 52, 53 are spaced apart to form a substantially vertical open passageway 72.

The feed device 50 is opened when it reaches the retracted position by the engagement of a roller 74 with a fixed part 76 of the frame of the baler. This causes the lower lip 53 to pivot open about a pivot 80. When the feed device 50 is in the open configuration, the pull-off device 44 can be driven to feed a length of film binding material F through the feed device 50 to increase the length of the cut end of the film binding material that extends from the front end of the feed device 50. If the film material has been bundled this cut end of bundled film binding material forms a relatively stiff tongue T of film binding material that extends from the end of the feed device 50.

The length of the tongue T can be adjusted by controlling operation of the pull-off device 44, for example by adjustable braking of the pull-off device and/or by operation of the magnetic clutch 70. Optionally, operation of the pull-off device 44 can be controlled automatically for example by an electronic control system or a computer, based on a number of factors including, for example, one or more of the following factors: a user setting for a long or short tongue, the PTO speed, the stretch setting of the pre-stretcher device 38, and environmental conditions such as temperature or humidity.

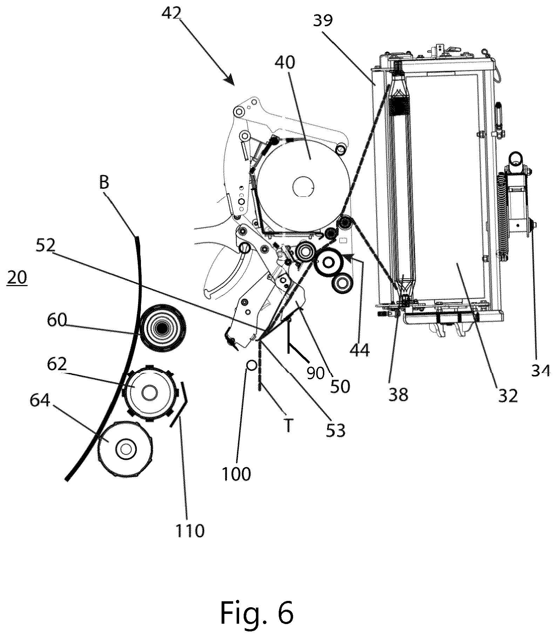

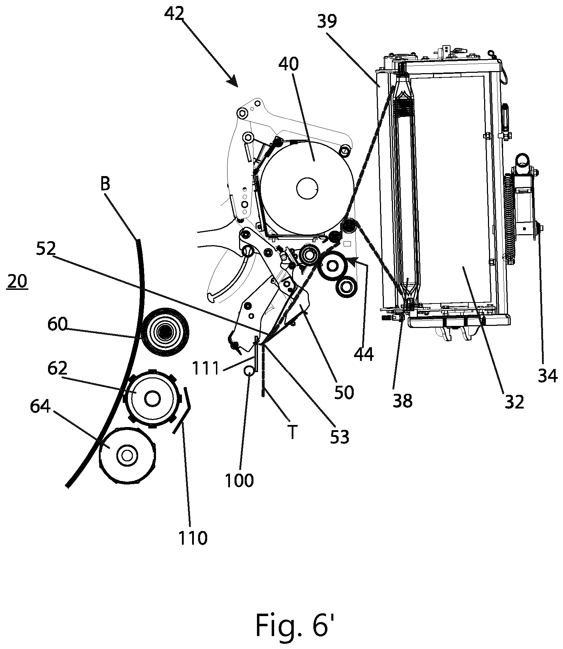

Figure 6 illustrates the feed mechanism 42 in a holding configuration, which it adopts while a bale is being formed in the bale chamber 20. The feed device 50 has moved forward from the retracted position shown in figure 5 and the upper and lower lips 52, 53 have closed, gripping the tongue T of film binding material, which extends from the feed device. Because the feed device 50 is closed, the cut end of the film material is held securely and cannot blow around, for example in windy conditions. Also, because the feed device 50 is closed, dust and dirt from the baler cannot enter the mouth of the feed device.

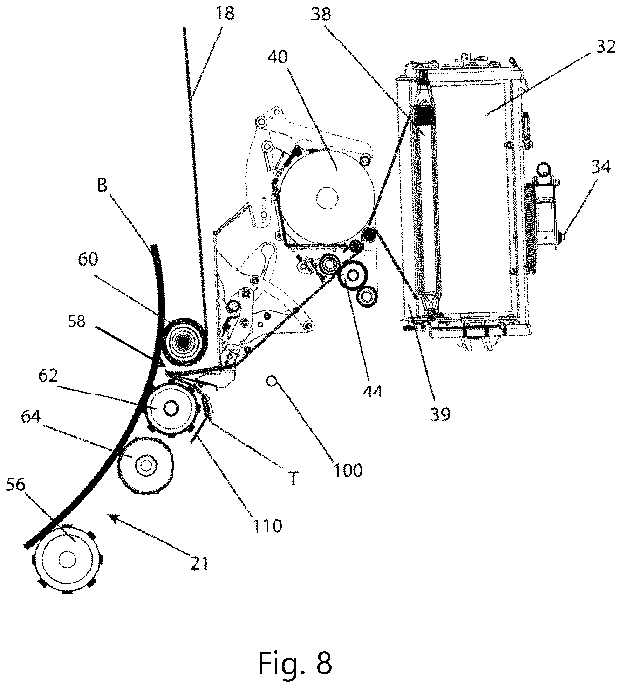

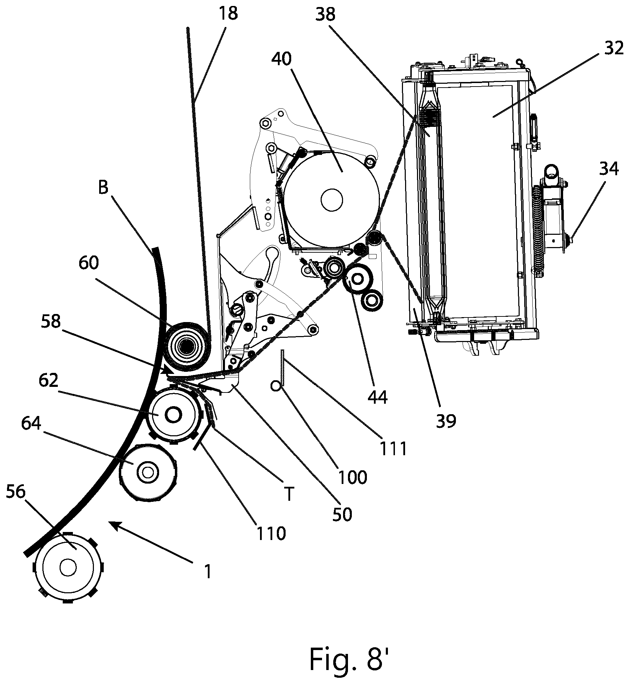

Figure 8 illustrates the feed mechanism 42 in the feed position, in which the cut end of the film binding material (the tongue T) is fed by the feed device 50 into the bale chamber 20 through the feed opening 58. The feed device 50 has pivoted forwards towards the bale chamber 20 so that the tongue T is caught between the rotating bale B and the press roller 62, thus drawing the film binding material into the bale chamber 20. It will be noted that the feed device 50 extends into the narrow feed opening 58 between the press elements (rollers) 60, 62, so that the position of the tongue T is closely controlled.

The tongue T is optionally formed from bundled film binding material, which has a much greater stiffness that the unbundled film binding material. This makes it easier to control during feeding. The length of the tongue T may be controlled by operation of the pull-off device 44 as described above, to ensure that it passes correctly through the feed opening 58 and is caught by the bale B.

As the feed device 50 moves forwards from the holding position to the feed position, the pull-off device 44 is driven by the arc gear 84 to draw film binding material from the supply device 28. The pull-off device 44 is configured to draw a length of film binding material that is less than the length required to accommodate movement of the feed device 50 from the holding position to the feed position. As a result, the tongue T is partially drawn back into the mouth of the feed device 50, which causes the tongue T to stand up in a more erect position. This allows it to be fed more accurately through the feed opening 58. The length of the tongue T is sufficient to allow it to be caught between the rotating bale B and the press roller 62, so that the film binding material is drawn around the cylindrical surface of the bale B as it rotates.

Figure 8 illustrates the configuration of the feed mechanism 42 during feeding of the film binding material F. At this stage, the bale B has been completely formed in the bale chamber 20 and the feed mouth has been moved to the feed position within the feed opening 58. The tongue T of film binding material is presented to the bale and is caught between the cylindrical surface of the rotating bale B and the press roller 62. Film binding material is thus drawn into the bale chamber 20. In this embodiment the reel 32 of film binding material is still in the vertical bundling position so that the film binding material is bundled to form a bundled tongue T. In the case of film binding material, the pull-off device 44 is activated to draw film binding material from the reel 32, preferably for the full feeding time. This is not needed with net binding material: the net will drive the pull-off device 44, the speed of the pull-off device being limited by the freewheel.

Once the tongue T of film binding material has been caught by the bale B, binding of the bale can commence as illustrated in figure 4. The feed mouth is partially retracted from the feed opening 58 to the binding position shown in figure 4. In this embodiment the reel 32 of film binding material is rotated to the horizontal binding position so that the film binding material F is not bundled as it is drawn off the reel. The film binding material F is stretched by the pre-stretching device 38, to increase the length of the film binding material, for example by a factor of 1.3 to 1.8, or 1.4 to 1.6, or typically about 1.5. The pull-off device 44 is activated to draw film from the supply, but it is driven at a speed that is less that the circumferential speed of the bale in the bale chamber, so that the film is drawn into the bale chamber 20 primarily by rotation of the bale B. However, in the event that the film binding material starts to tear, the pull-off device 44 will continue to feed the film towards the bale chamber, to ensure that the tear does not spread across the entire width of the film.

The film binding material F passes through the feed device 50 and is drawn over the edges of the upper lip 52, which spreads the film so that the two strips of film cover the full width of the bale. Binding continues until an adequate thickness of film binding material has been applied to the cylindrical surface of the bale B. Typically, this may require three to five layers of film binding material.

Once binding of the bale has been completed, the reel 32 of film binding material F is optionally rotated back to the vertical bundling position shown in figure 5, so that the film binding material is gathered together into a narrow, bundled strip. The cutter device 26 is then activated to cut the film between the feed device 50 and the feed opening 58, and the brake 47 is applied to halt rotation of the pull-off device 44. The feed device 50 is then retracted fully, causing the feed device to open. The bound bale can then be ejected from the bale chamber 20.

As the film binding material F has been stretched by the pre-stretcher device 38, it is under tension. Therefore, when the film binding material is cut, the tongue T contracts into the feed device 50 towards the pull-off device 44. After cutting, the pull-off device 44 is actuated to feed an additional length of film binding material towards the feed device 50, to increase the length of the tongue T that extends from the end of the feed device 50. As the mouth of the feed device 50 is open, the film binding material falls freely through the passageway 72. Once the correct length of the tongue T has been fed through the feed device 50, the pull-off device 44 is deactivated, for example by disengaging the magnetic clutch 70.

Optionally, the feed device 50 is then moved forward from the fully retracted position to the holding position shown in figure 6. As it moves to this position, the mouth of the feed device 50 closes, gripping the tongue T of film material between the lips 52,53. The feed device 50 remains in the holding position until the next bale has been formed in the bale chamber 20.

Upon completion of the bale, the feed device 50 moves to the feed position shown in figure 8 to repeat the binding process. During movement of the feed mouth from the holding position shown in figure 5 to the feeding position shown in figure 8, the pull-off device 44 is driven by an arc gear 84 to draw a length of film binding material that is less than the length required to accommodate movement of the feed mouth from the holding position to the feed position, so that the tongue T is drawn partially back into mouth of the feed device 50. This causes the tongue T to adopt an erect position in which it can be inserted more easily into the feed opening 58.

In accordance with the invention, the baler further comprises at least one control element 90, 100, 110 that is configured to control the position of the tongue as it is fed into the bale chamber. The control element 90, 100, 110 can take a variety of different forms as illustrated in figures 9 to 15.

In accordance with the invention shown in figures 9 to 15 the control element comprises a curtain 90 consisting of a sheet of flexible material that is attached to the feed device 50. The curtain 90 may for example be attached to the lower lip 53 of a feed mouth that has upper and lower lips. The curtain 90 may for example be made of a PVC-coated fabric or rubber-coated fabric or similar resilient material. A fixed edge 92 of the curtain is attached to the lower surface of the lower lip 53 between front edge and the rear edge of the lower lip, and a free edge 94 of the curtain can extend forwards approximately to the front edge of the lip 53. When the lower lip 53 is inclined to the vertical the free edge 94 of the curtain 90 hangs away from the lower lip 53, for example as shown in Fig. 9.

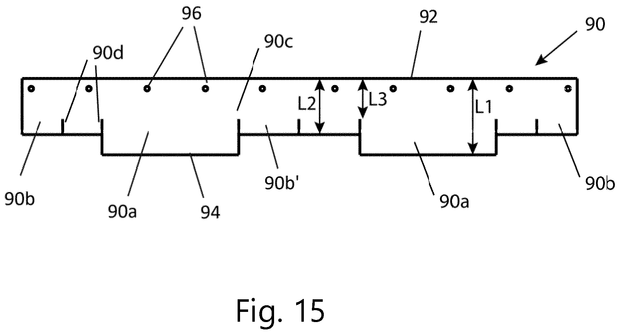

One possible configuration of the curtain 90 is illustrated in Fig. 15. In this embodiment the curtain 90 includes two longer portions 90a each with a first length L1 and three shorter portions 90b, 90b' each with a second length L2, where L2 < L1. Optionally, L2 = A.L1, where A is in the range 0.6 to 0.9, typically about 0.75.

In this embodiment, two of the shorter portions 90b are located at the lateral ends of the curtain 90 and the third shorter portion 90b' is located in the middle of the curtain 90, between the two longer portions 90a. The longer portions 90a are positioned to coincide with the positions of the bundled tongues of binding material that extend from the feed device 50.

In the embodiment illustrated in Fig. 15, a plurality of slits 90d are provided in the free edge 94 of the curtain. The slits 90d may for example be located at each of the junctions between the longer portions 90a and the shorter portions 90b, 90b', and in the middle of each of the shorter portions 90b, 90b'. The slits 90d extend from the free edge 94 towards the fixed edge 92, leaving a base portion 90c of the curtain between the fixed edge 92 and the ends of the slits 90d. The base portion 90c has a length L3 where L3 < L2. Optionally, L3 = B.L2, where B is in the range 0.3 to 0.7, typically about 0.5. A number of mounting holes 96 are provided in the base portion 90c near to the fixed edge 92, which may receive fasteners, e.g. bolts, to attach the curtain 90 to the lower lip 53.

The curtain 90 may extend across substantially the entire width W of the bale chamber between the side walls. Alternatively, the width W_{C} of the curtain 90 may be less than the width W of the bale chamber. Optionally, the width Wc of the curtain 90 may be Wc = C.W where C is in the range 0.7-1.0, typically about 0.9. Typically, the longer portions 90a and the central shorter portion 90b' each have a width in the range 20-30% of the width W of the bale chamber, and the end shorter portions 90b each have a width in the range 10-20% of the width W.

The curtain 90 may for example be attached to the lower lip/feed element 53 as shown in Fig. 9. In this embodiment, the curtain 90 is attached to the lower lip/feed element 53 by a number of fasteners 97, e.g. bolts, that extend through the mounting holes 96. A spacer 98 is located between the curtain 90 and the lower lip/feed element 53. The spacer 98 may for example comprise a plate that extends across the width of the curtain 90. The front edge of the plate 98 (located between the fasteners 97 and the free edge 94 of the curtain) may be bent away from the lower lip/feed element 53 to push the curtain 90 away from the lower lip/feed element 53.

Optionally, the control element comprises a conditioner element 100 that is located just below the path of the feed device 50 as it moves from the retracted position shown in Fig. 5 to the feed position shown in Fig. 8. The conditioner element 100 extends widthwise the baler between the side plates. In this embodiment the conditioner element 100 comprises a cylindrical bar or rod but it could take other forms, for example a plate. The conditioner element 100 is positioned so that the tongue T of binding material that hangs down from the feed device 50 is dragged across the surface of the conditioner element 100 as the feed device 50 moves from the retracted position to the feed position.

Optionally, the control element comprises a shield 110, which is provided adjacent the lower roller 62, which is positioned below the feed opening 58. The shield 110 covers an outer, lower part of the roller 62 relative to the bale chamber 20. In the embodiment shown in the drawings, the shield 110 covers approximately two thirds of the outer semi-circumference of the lower roller 62. Alternatively, it may cover slightly more or less than this, for example from about 50% to 80% or from 60% to 75% of the outer semi-circumference of the lower roller 62. If the binding material is bundled, the shield 110 may have a width less than the width W of the bale chamber, and it may comprise a plurality of shield sections that are distributed across the width of the bale chamber and are positioned to coincide with the positions of the tongues of binding material.

Operation of the binding apparatus is substantially as described above and illustrated in figures 5-8, with the modifications described below.

In figure 5 the feed device 50 is shown in the retracted position, in which the mouth is open. The pull-off device 44 is driven to feed a length of bundled film binding material through the feed device 50 to increase the length of the tongue T that extends from the front end of the feed device. As described above, the length of the tongue T can be adjusted by controlling operation of the pull-off device 44, for example by adjustable braking and/or by operation of the magnetic clutch 70. Alternatively, the length of the tongue can be controlled by operation of the cutting device. The curtain 90 is hanging freely from the lower surface of the lower lip 53.

Figures 6 to 8 illustrate the feed mechanism as the feed device 50 is advanced from the retracted position shown in figure 5 to the feed position shown in Figure 8.

Figure 6 illustrates the feed device 50 in a holding configuration, which it adopts while a bale is being formed in the bale chamber 20. The feed device 50 has moved forward from the retracted position shown in figure 5 and the upper and lower lips 52, 53 have closed, gripping the tongue T of bundled film binding material, which hangs down against the conditioner element 100.

In figure 7 the feed mouth has advanced from the holding position towards the feed position. As the feed mouth advances, the tongue T is dragged across the conditioner element 100. At the same time the resilient curtain 90 presses the tongue T against the conditioner element 100. This dragging action has the effect of straightening and slightly stretching the tongue T and removing any curl that may be present. As a result of this dragging action the tongue T becomes straighter.

After the end of the tongue T has cleared the conditioner element 100 the tongue T falls downwards under gravity. As the tongue T is quite long it extends downwards past the outer surface of the lower roller 62, as shown in figure 8. However, contact between the tongue T and the outer surface of the roller 62 is prevented by the shield 110, which covers the lower, outer part of the roller 62. Therefore, the tongue T is not initially affected by rotation of the lower roller 62.

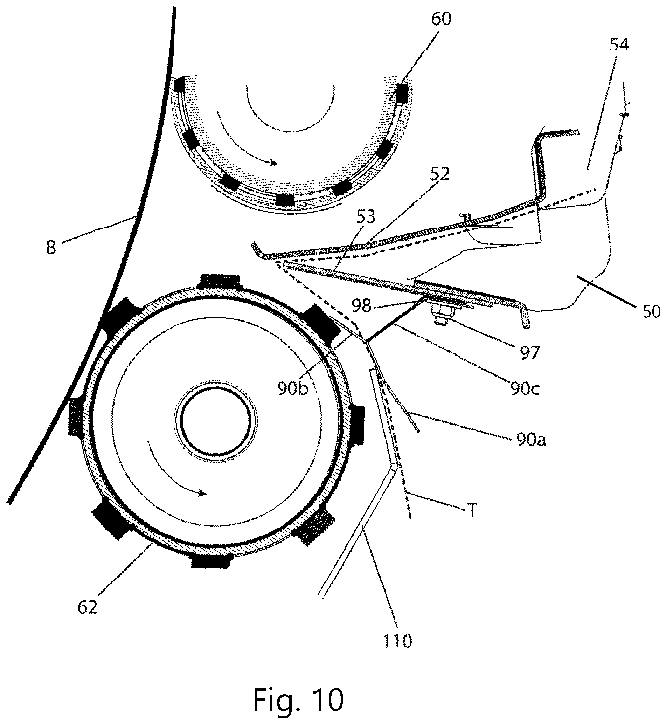

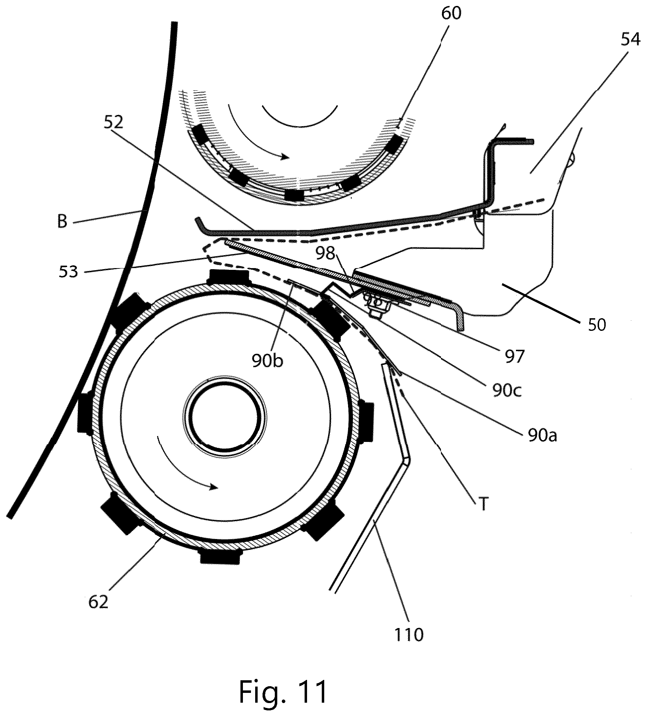

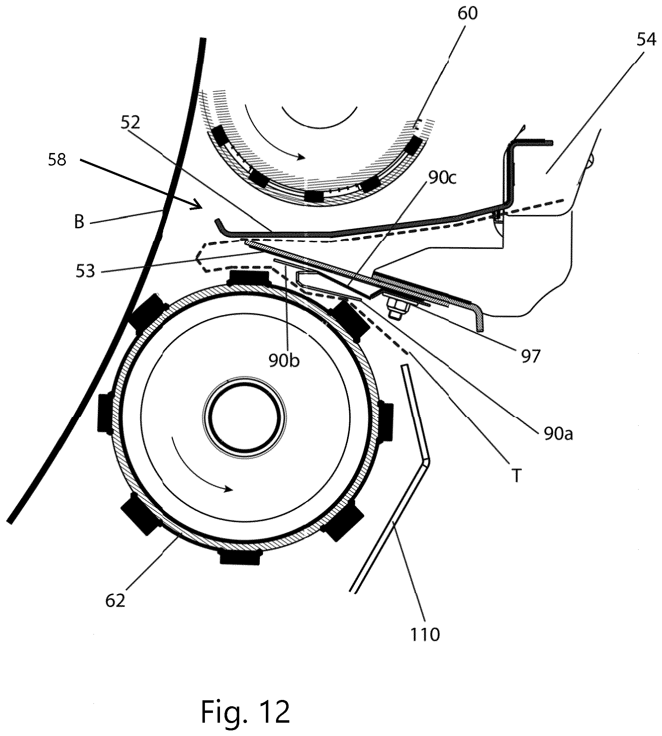

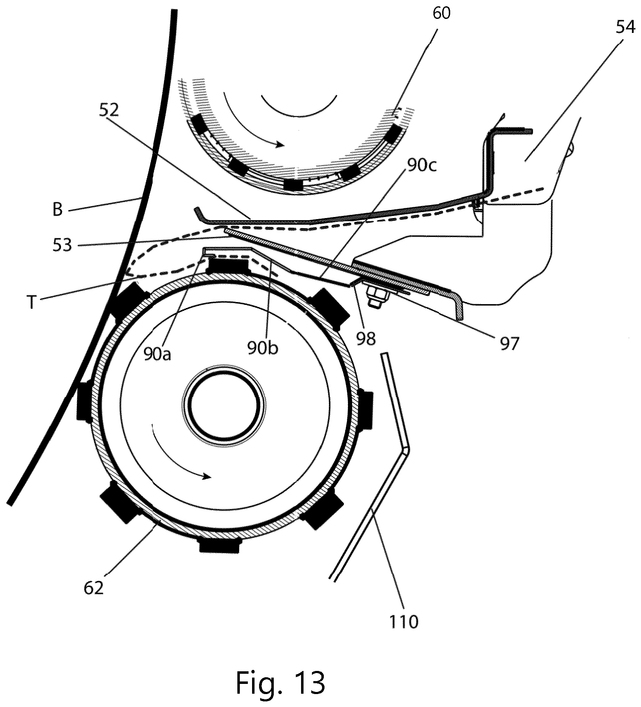

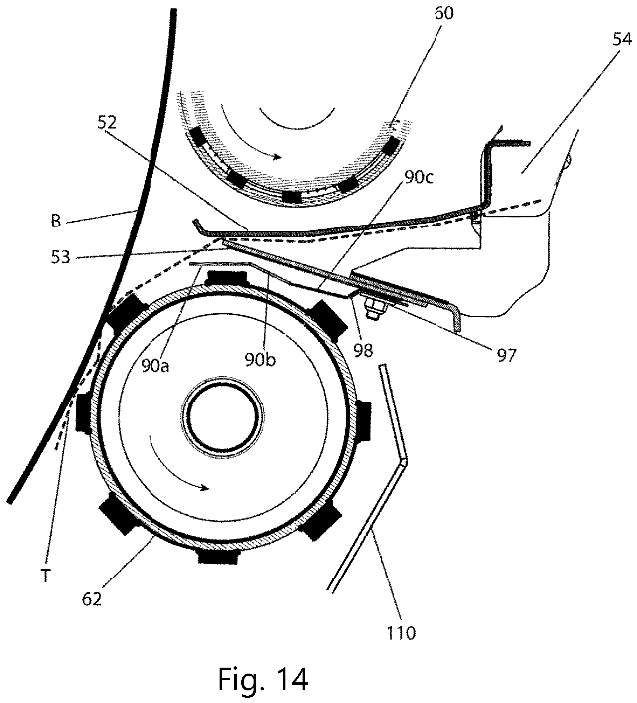

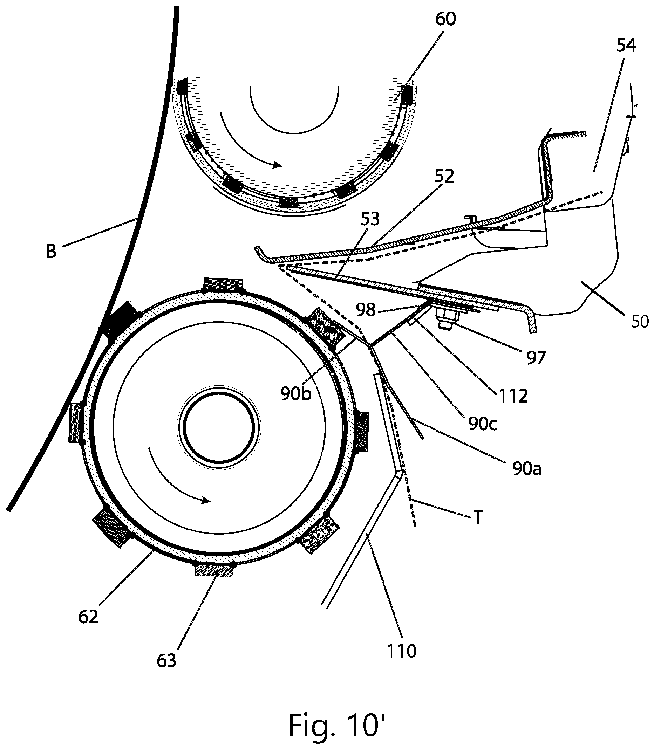

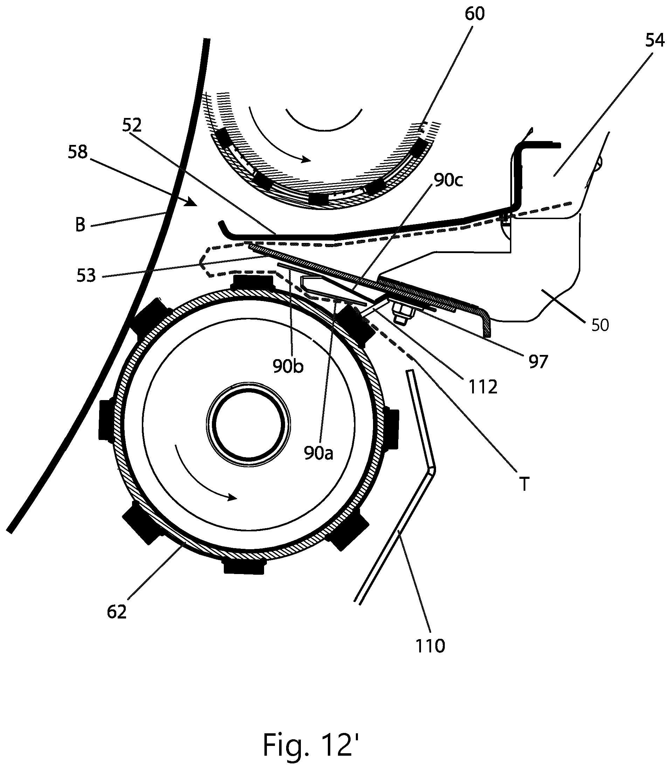

The process by which the tongue T is drawn into the bale chamber is shown in more detail in figures 9 to 14. As the feed device 50 moves towards the feed position the tongue T is dragged over the surface of the shield 110, as shown in figure 9. The resilient curtain 90 is also dragged over the shield 110 and contact with the shield causes the curtain 90 to fold backwards as the feed device 50 moves forwards, as shown in figure 9. After a while, the shorter portions 90b of the curtain move forwards past the forward edge of the shield 110 or beside the ends of the shield 110 and then spring forwards, owing to the resilience of the curtain material, into contact with the lower roller 62, as shown in figure 10. The shorter portions 90b are then drawn forward by the rotating lower roller 62 causing the base portion 90c of the curtain to fold forwards, as shown in figure 11. The lower roller 62 continues to rotate drawing the shorter portions 90b, 90b' and then the longer portions 90a towards the bale chamber 20, as shown in figure 12. The curtain pushes the tongue T into the feed opening 58, which ensures that the tongue T of binding material is drawn into the bale chamber 20 and wrapped around the bale, as shown in figures 13 and 14.

This ensures that the tongue T is correctly inserted into the bale chamber and wrapped around the bale as the bale rotates. The curtain 90 does not come into contact with the bale as it does not extend beyond the leading end of the feed device 50. Therefore, when the feed device 50 retracts from the feeding position the curtain 90 is also withdrawn from the feed opening 58.

As mentioned above, the curtain 90 may include one or more longer portions 90a with a first length L1 that are aligned with the tongues T, and one or more shorter portions 90b, 90b' each with a second length L2, where L1 > L2. This configuration of the curtain is particularly suitable for guiding one or more bundled tongues of binding material. The shorter portions 90b, 90b' help to ensure that the longer portions 90a of the curtain are correctly drawn into the feed opening 58 between the upper and lower rollers 60, 62. When the feed device 50 is in the position shown in figure 10, in which the longer portions 90a of the curtain 90 are still folded backwards by the shield 110, the shorter portions 90b, 90b' of the curtain can be caught by the lower roller 62 and drawn towards the bale chamber 20. The shorter portions 90b, 90b' pull the longer portions 90a forward so that they are drawn towards the bale chamber 20.

Alternatively, the curtain 90 may have a uniform length across all or most of its width. In this case, the shield 110 will also extend over substantially the full width of the bale chamber. Operation of the feed device can be timed so that the curtain flips the tongue T of binding material over the edge of the shield 110 substantially simultaneously across the full width of the curtain. This configuration of the curtain is particularly suitable for guiding an unbundled tongue of binding material into the bale chamber and ensuring that the binding material is fed uniformly into the bale chamber across its entire width.

When the feed device 50 is entering the feed opening 58 as illustrated in figures 9 to 14 it is positioned between the tongue T and the upper roller 60, and the tongue T is pulled tight over the edge of the lower feed element/lip 53 as it is dragged across the shield 110. This prevents the tongue T from coming into contact with the upper roller 60 when it is caught by the lower roller 62. This risk of the tongue T being pushed away from the bale chamber is therefore considerably reduced.

The curtain 90, and optionally the conditioner element 100 and the shield 110 constitute control elements that individually and/or in combination ensure that the position of the tongue T is closely controlled as it is inserted into the bale chamber 20. This ensures that the tongue T is caught between the rotating bale B and the press roller 62, thus drawing the binding material into the bale chamber 20. It should be noted that although the curtain 90, the conditioner element 100 and the shield 110 all work in combination, the individual control elements 90, 100, 110 each provide advantages in relation to controlling the position of the tongue.

Figure 5' is similar to Figure 5 and shows a binding apparatus according to the first embodiment of the invention. Figure 5' illustrates a problem that can occasionally arise during feeding of the binding material. The components and operation of the binding apparatus are as described previously in relation to Figure 5.

Figure 5' illustrates the configuration of the feed mechanism 42 after the film binding material F has been cut. During the binding process the film binding material F is under tension as it is stretched by the pre-stretcher device 38. Therefore, when the film binding material is cut, the tongue T contracts into the feed device 50 towards the pull-off device 44. Normally, after the tongue T has retracted it hangs downwards from the end of the feed device 50 as shown in figure 5. However, occasionally the film binding material can spring back so quickly that it becomes tangled inside the feed device 50 as shown in figure 5'. This can cause a blockage preventing the film from feeding correctly into the bale chamber 20 during a subsequent binding process. Although this problem only arises rarely it is unpredictable and can cause inconvenience for the operator, who then has to clear the blockage before binding can recommence.

Figures 5", 6', 7' and 8' are side views showing components of a binding apparatus according to a second embodiment of the invention, which is designed to address the potential problem described above. Figures 5", 6', 7' and 8' are similar to figures 5, 6, 7 & 8 and the previous description of those figures applies also to these figures, except as described below.

In the second embodiment of the invention the conditioner element 100 comprises at least one flexible conditioner member 111. The flexible conditioner member 111 may be attached to a support that is similar to the conditioner element 100 described above, or another support structure. The flexible conditioner member 111 is preferably made of a resilient material, for example rubber or polyurethane. Alternatively, it may be made of a rigid material and mounted via a flexible element, for example a spring, pivot or hinge, to a fixed support structure. The flexible conditioner member 111 may for example take the form of a resilient plate. Optionally the flexible conditioner member 111 may have a width that is less than the width of the baler, as it only has to be wide enough to intercept the tongue T. For example, it may have a width of about 10-15cm. If the bale B is bound with two or more strips of film binding material an equal number of flexible conditioner members 111 may be provided.

The or each flexible conditioner member 111 is positioned in the path of the feed mouth as it moves from the retracted position to the feed position. This causes the flexible conditioner member 111 to bend forward towards the bale chamber as the feed mouth passes by, as shown in figure 7'. The tongue T of binding material that hangs down from the feed mouth is dragged across the surface of the flexible conditioner member 111 as the feed mouth moves towards the feed position, which straightens and conditions the tongue T. The flexible conditioner member 111 springs up to a vertical position once the feed mouth has passed by, as shown in figure 8'.

Once the tongue T of binding material has been fed into the bale chamber 20 the feed mouth returns to its retracted position as shown in figure 5". The film binding material F is then drawn into the bale chamber 20 by rotation of the bale B to bind the bale. The upper part of the flexible conditioner member 111 is located in the path of the film binding material F and is bent forwards towards the bale chamber 20 by contact with the film binding material, as illustrated in figure 5".

When the film binding material is cut by the cutter 26, the flexible conditioner member 111 deflects the tongue T of binding material upwards and slows the speed at which the tongue retracts so that it does not become tangled inside the mouth of the feed device 50. Instead, the tongue T hangs downwards from the feed device 50 as shown in figure 6'. This prevents a blockage forming within the feed device 50 and ensures correct feeding of the film binding material into the bale chamber during a subsequent binding process.

Figures 9', 10' and 12' are side views showing components of a binding apparatus according to a third embodiment of the invention. Except as described below, the third embodiment is similar to the first embodiment shown in figures 9, 10 & 12 and the previous description of those figures applies also to the third embodiment.

The third embodiment addresses a problem that can occasionally arise, particularly in wet conditions, for example during wet weather or when the crop contains a high degree of moisture. In these wet conditions the driven press roller 62 can become very slippery, making it more difficult to catch the bundled tongue T and feed it between the rotating bale B and the press roller 62 to draw the film binding material into the bale chamber 20.

To resolve this problem the curtain 90 is modified to include a resilient support element 112, which is provided on a lower part of the feed device 50. The resilient support element 112 may for example be made of rubber or polyurethane or a similar material and it may for example take the form of a resilient plate that extends across at least part of the width of the baler in a direction parallel to the axis of the bale. The resilient support element 112 may for example be attached to the lower lip/feed element 53 by the fasteners 97, e.g. bolts, that extend through the mounting holes 96 in the curtain 90.

Optionally the resilient support element 112 may have a width that is less than the width of the baler, as it only has to be wide enough to support the part of the curtain 90 that intercepts the tongue T. For example, it may have a width of about 10-15cm. If the bale B is bound with two or more strips of film binding material an equal number of resilient support elements 112 may be provided. The resilient support element 112 extends forwards from the fasteners 97 towards the front edge of the feed mouth so that a protruding portion of the resilient support element 112 lies beneath and helps to support the curtain 90. This protruding portion hangs downwards from the underside of the lower lip/feed element 53.

Figures 9', 10' and 12' show the feed device 50 in consecutive positions as it moves further into the feed opening 58 between the idler roller 60 and the driven press roller 62. The final position of the feed device 50 is shown in figure 12'. In this final position the resilient support element 112 is pressed against the outer periphery of the drive roller 62 or, if provided, the drive formations 63. The resilient support element 112 thus presses the curtain 90 and the tongue T of film binding material F against the surface of the drive roller 62, ensuring that the tongue T is drawn into the bale chamber and the film binding material F is wrapped around the bale B.

In the embodiments described above, the binding material is described primarily as film binding material. However, the invention is also applicable to other types of binding material including net binding material.

The invention is also primarily described in relation to a baler that includes a bundling device for bundling the binding material to produce a bundled tongue. However, the invention is also applicable to balers that do not have a bundling device, in which an unbundled tongue of binding material is fed into the bale chamber.

The feed device 50 is described above primarily as a feed mouth that includes upper and lower feed elements/lips 52, 53. In this case, the tongue T of binding material may be held in tension by the interaction of the curtain 90 with the conditioner element 100 and/or the shield 110.

The feed rollers 46,48 described above are not always required. In an alternative arrangement the binding material may be pulled into the bale chamber by rotation of the bale and tensioning of the film can then be achieved for example by braking rotation of the supply roll.

## Claims

1. A round baler comprising a bale chamber (20) having a crop mouth (21) for introducing bale material into the bale chamber (20) and a plurality of press elements (16,18, 60,56, 62, 64) configured to compress bale material in the bale chamber (20) to form a round bale (B), and a binding apparatus (24) configured to apply a binding material to a cylindrical surface of a bale formed in the bale chamber (20) to bind the bale (B), wherein the binding apparatus (24) includes a feed mechanism (42) that feeds binding material to the bale chamber (20), the feed mechanism (42) comprising a feed device (50) that receives the binding material and is configured for movement between (i) a feed position adjacent a feed opening (58) of the bale chamber, which the feed device (50) adopts when feeding binding material into the bale chamber (20), the feed opening being (58) located between a pair of adjacent press elements (60, 62) of the plurality of press elements (16, 18, 60, 56, 62, 64), and (ii) a retracted position spaced from the feed opening (58), and a cutter device (26) configured to cut the binding material after the bale (B) has been bound, so that a cut end of binding material forms a tongue (T) that extends from a front edge of the feed device (50), wherein the baler further comprises at least one control element (90, 100, 110) that is configured to control the position of the tongue (T) as it is fed into the bale chamber (20), wherein the feed device (50) comprises a feed mouth that includes first and second feed elements (52,53) configured to grip opposite sides of the binding material, the feed mouth being moveable to the feed position within the feed opening (58), and the at least one control element (90, 100, 110) comprises a flexible curtain (90) attached to the feed device (50) between the front edge and a rear edge thereof, which is configured to be drawn at least partially into the feed opening (58) with the tongue (T).

2. A round baler according to claim 1, wherein the curtain (90) has a length such that a free edge (94) of the curtain does not extend beyond the front edge of the feed device.

3. A round baler according to claim 2, wherein the curtain (90) includes at least one longer portion (90a) with a length L1 and at least one shorter portion (90b) with a length L2, where L2 < L1.

4. A round baler according to claim 3, wherein the curtain (90) includes at least one split in a free edge (94) of the curtain, and wherein said at least one split is located at a junction between a longer portion (90a) and a shorter portion (90b).

5. A round baler according to any preceding claim, wherein the width W_{C} of the curtain (90) is W_{C} = C.W where C is in the range 0.7-1.0 and W is a width of the bale chamber.

6. A round baler according to any preceding claim, wherein the at least one control element additionally comprises a conditioner element (100) that is configured to engage the tongue (T) as the feed device element (52,53) moves towards the feed opening (58).

7. A round baler according to claim 6, wherein the conditioner element (100) comprises a flexible conditioner member (111) that engages the binding material between the cutter device (26) and the feed device (50) in the retracted position, wherein the flexible conditioner member (111) is configured to control movement of the tongue (T) towards the feed device (50) when the binding material is cut.

8. A round baler according to claim 7, wherein the flexible conditioner member (111) comprises a resilient material.

9. A round baler according to any preceding claim, wherein the at least one control element additionally comprises a resilient support element (112) attached to the feed device (50) between the front and rear edges thereof, which is configured to engage a press roller (62) located adjacent the feed opening (58) when the feed device (50) is in the feed position.

10. A round baler according to claim 9, wherein the resilient support element (112) is configured to press the binding material against the press roller (62) when the feed device (50) is in the feed position.

11. A round baler according to claim 10, wherein the resilient support element (112) is configured to press the flexible curtain (90) against the press roller (62) when the feed device (50) is in the feed position.

12. A round baler according to any preceding claim, wherein the at least one control element additionally comprises a shield (110) that partially surrounds a press roller (62) located adjacent and below the feed opening (58), the shield (110) surrounds at least an outer, lower part of the circumference of the press roller (62).

13. A round baler according to claim 12, wherein an upper edge of the shield (110) is located between the upper periphery and the rotational axis of the press roller (62).

14. A round baler according to any preceding claim, wherein the binding material comprises film (F) binding material, the binding apparatus (24) includes a bundling device that is configured to bundle the binding material before the binding material is cut, to form a tongue (T) of bundled binding material, wherein the tongue (T) of bundled binding material has a width less than the width of the unbundled binding material.

15. A round baler according to any preceding claim, wherein the feed mechanism (42) includes a pull-off device (44) that is configured to draw binding material from a supply (32).

## Patentansprüche

1. Eine Rundballenpresse, beinhaltend eine Ballenkammer (20) mit einem Erntegutmaul (21) zum Einführen von Ballenmaterial in die Ballenkammer (20) und einer Vielzahl von Presselementen (16, 18, 60, 56, 62, 64), die dazu konfiguriert sind, Ballenmaterial in der Ballenkammer (20) zu komprimieren, um einen Rundballen (B) zu bilden, und eine Bindeeinrichtung (24), die dazu konfiguriert ist, ein Bindematerial auf eine zylindrische Oberfläche eines in der Ballenkammer (20) gebildeten Ballens aufzubringen, um den Ballen (B) zu binden, wobei die Bindeeinrichtung (24) einen Zuführmechanismus (42) umfasst, der der Ballenkammer (20) Bindematerial zuführt, wobei der Zuführmechanismus (42) eine Zuführvorrichtung (50) beinhaltet, die das Bindematerial aufnimmt und zur Bewegung zwischen (i) einer Zuführposition benachbart zu einer Zuführöffnung (58) der Ballenkammer, die die Zuführvorrichtung (50) beim Zuführen von Bindematerial in die Ballenkammer (20) einnimmt, wobei die Zuführöffnung (58) zwischen einem Paar benachbarter Presselemente (60, 62) der Vielzahl von Presselementen (16, 18, 60, 56, 62, 64) angeordnet ist, und (ii) einer zurückgezogenen Position, die von der Zuführöffnung (58) beabstandet ist, konfiguriert ist, und eine Schneidvorrichtung (26), die dazu konfiguriert ist, das Bindematerial zu schneiden, nachdem der Ballen (B) gebunden wurde, sodass ein geschnittenes Ende des Bindematerials eine Zunge (T) bildet, die sich von einer Vorderkante der Zuführvorrichtung (50) erstreckt, wobei die Ballenpresse ferner mindestens ein Steuerelement (90, 100, 110) beinhaltet, das dazu konfiguriert ist, die Position der Zunge (T) zu steuern, während sie der Ballenkammer (20) zugeführt wird, wobei die Zuführvorrichtung (50) ein Zuführmaul beinhaltet, das ein erstes und ein zweites Zuführelement (52, 53) umfasst, die dazu konfiguriert sind, gegenüberliegende Seiten des Bindematerials zu greifen, wobei das Zuführmaul in die Zuführposition innerhalb der Zuführöffnung (58) beweglich ist und das mindestens eine Steuerelement (90, 100, 110) einen flexiblen Vorhang (90) beinhaltet, der an der Zuführvorrichtung (50) zwischen der Vorderkante und einer Hinterkante davon angebracht ist, der dazu konfiguriert ist, mit der Zunge (T) mindestens teilweise in die Zuführöffnung (58) gezogen zu werden.

2. Rundballenpresse gemäß Anspruch 1, wobei der Vorhang (90) eine derartige Länge aufweist, dass sich eine freie Kante (94) des Vorhangs nicht über die Vorderkante der Zuführvorrichtung hinaus erstreckt.

3. Rundballenpresse gemäß Anspruch 2, wobei der Vorhang (90) mindestens einen längeren Abschnitt (90a) mit einer Länge L1 und mindestens einen kürzeren Abschnitt (90b) mit einer Länge L2 umfasst, wobei L2 < L1.

4. Rundballenpresse gemäß Anspruch 3, wobei der Vorhang (90) mindestens einen Spalt in einer freien Kante (94) des Vorhangs umfasst und wobei der mindestens eine Spalt an einer Verbindungsstelle zwischen einem längeren Abschnitt (90a) und einem kürzeren Abschnitt (90b) angeordnet ist.

5. Rundballenpresse gemäß einem der vorhergehenden Ansprüche, wobei die Breite W_{C} des Vorhangs (90) W_{C} = C.W ist, wobei C im Bereich von 0,7-1,0 liegt und W eine Breite der Ballenkammer ist.

6. Rundballenpresse gemäß einem der vorhergehenden Ansprüche, wobei das mindestens eine Steuerelement zusätzlich ein Konditionierungselement (100) beinhaltet, das dazu konfiguriert ist, die Zunge (T) in Eingriff zu nehmen, während sich das Zuführvorrichtungselement (52, 53) in Richtung der Zuführöffnung (58) bewegt.

7. Rundballenpresse gemäß Anspruch 6, wobei das Konditionierungselement (100) ein flexibles Konditionierungselement (111) beinhaltet, das das Bindematerial zwischen der Schneidvorrichtung (26) und der Zuführvorrichtung (50) in der zurückgezogenen Position in Eingriff nimmt, wobei das flexible Konditionierungselement (111) dazu konfiguriert ist, die Bewegung der Zunge (T) in Richtung der Zuführvorrichtung (50) zu steuern, wenn das Bindematerial geschnitten wird.

8. Rundballenpresse gemäß Anspruch 7, wobei das flexible Konditionierungselement (111) ein elastisches Material beinhaltet.

9. Rundballenpresse gemäß einem der vorhergehenden Ansprüche, wobei das mindestens eine Steuerelement zusätzlich ein elastisches Stützelement (112) beinhaltet, das an der Zuführvorrichtung (50) zwischen deren Vorder- und Hinterkante angebracht ist und dazu konfiguriert ist, eine Presswalze (62) in Eingriff zu nehmen, die benachbart zu der Zuführöffnung (58) angeordnet ist, wenn sich die Zuführvorrichtung (50) in der Zuführposition befindet.

10. Rundballenpresse gemäß Anspruch 9, wobei das elastische Stützelement (112) dazu konfiguriert ist, das Bindematerial gegen die Presswalze (62) zu pressen, wenn sich die Zuführvorrichtung (50) in der Zuführposition befindet.

11. Rundballenpresse gemäß Anspruch 10, wobei das elastische Stützelement (112) dazu konfiguriert ist, den flexiblen Vorhang (90) gegen die Presswalze (62) zu pressen, wenn sich die Zuführvorrichtung (50) in der Zuführposition befindet.

12. Rundballenpresse gemäß einem der vorhergehenden Ansprüche, wobei das mindestens eine Steuerelement zusätzlich eine Abschirmung (110) beinhaltet, die eine Presswalze (62) teilweise umgibt, die benachbart zu und unter der Zuführöffnung (58) angeordnet ist, wobei die Abschirmung (110) mindestens einen äußeren, unteren Teil des Umfangs der Presswalze (62) umgibt.

13. Rundballenpresse gemäß Anspruch 12, wobei eine obere Kante der Abschirmung (110) zwischen dem oberen Rand und der Drehachse der Presswalze (62) angeordnet ist.

14. Rundballenpresse gemäß einem der vorhergehenden Ansprüche, wobei das Bindematerial Folien(F)-Bindematerial beinhaltet, wobei die Bindeeinrichtung (24) eine Bündelungsvorrichtung umfasst, die dazu konfiguriert ist, das Bindematerial zu bündeln, bevor das Bindematerial geschnitten wird, um eine Zunge (T) aus gebündeltem Bindematerial zu bilden, wobei die Zunge (T) aus gebündeltem Bindematerial eine Breite aufweist, die geringer ist als die Breite des ungebündelten Bindematerials.

15. Rundballenpresse gemäß einem der vorhergehenden Ansprüche, wobei der Zuführmechanismus (42) eine Abziehvorrichtung (44) umfasst, die dazu konfiguriert ist, Bindematerial aus einer Zuführung (32) zu ziehen.

## Revendications

1. Une presse à balles rondes comprenant une chambre à balle (20) ayant une bouche à récolte (21) pour l'introduction de matière pour balle jusque dans la chambre à balle (20) et une pluralité d'éléments de presse (16, 18, 60, 56, 62, 64) configurés pour comprimer de la matière pour balle dans la chambre à balle (20) afin de former une balle ronde (B), et un appareil de liage (24) configuré pour appliquer un matériau de liage sur une surface cylindrique d'une balle formée dans la chambre à balle (20) afin de lier la balle (B), dans laquelle l'appareil de liage (24) inclut un mécanisme d'alimentation (42) qui alimente la chambre à balle (20) en matériau de liage, le mécanisme d'alimentation (42) comprenant un dispositif d'alimentation (50) qui reçoit le matériau de liage et est configuré pour se déplacer entre (i) une position d'alimentation adjacente à une ouverture d'alimentation (58) de la chambre à balle, que le dispositif d'alimentation (50) adopte lors de l'alimentation de la chambre à balle (20) en matériau de liage, l'ouverture d'alimentation (58) étant située entre une paire d'éléments de presse adjacents (60, 62) de la pluralité d'éléments de presse (16, 18, 60, 56, 62, 64), et (ii) une position rétractée espacée de l'ouverture d'alimentation (58), et un dispositif de coupe (26) configuré pour couper le matériau de liage après que la balle (B) a été liée, de sorte qu'une extrémité coupée du matériau de liage forme une languette (T) qui s'étend à partir d'un bord avant du dispositif d'alimentation (50), dans laquelle la presse à balles comprend en outre au moins un élément de commande (90, 100, 110) qui est configuré pour commander la position de la languette (T) tandis que la chambre à balle (20) en est alimentée, dans laquelle le dispositif d'alimentation (50) comprend une bouche d'alimentation qui inclut des premier et deuxième éléments d'alimentation (52, 53) configurés pour saisir des côtés opposés du matériau de liage, la bouche d'alimentation pouvant être déplacée jusqu'à la position d'alimentation à l'intérieur de l'ouverture d'alimentation (58), et l'au moins un élément de commande (90, 100, 110) comprend un rideau flexible (90) fixé au dispositif d'alimentation (50) entre le bord avant et un bord arrière de celui-ci, qui est configuré pour être tracté au moins partiellement jusque dans l'ouverture d'alimentation (58) avec la languette (T).

2. Une presse à balles rondes selon la revendication 1, dans laquelle le rideau (90) a une longueur telle qu'un bord libre (94) du rideau ne s'étend pas au-delà du bord avant du dispositif d'alimentation.

3. Une presse à balles rondes selon la revendication 2, dans laquelle le rideau (90) inclut au moins une portion plus longue (90a) d'une longueur L1 et au moins une portion plus courte (90b) d'une longueur L2, où L2 < L1.

4. Une presse à balles rondes selon la revendication 3, dans laquelle le rideau (90) inclut au moins une fente dans un bord libre (94) du rideau, et dans laquelle ladite au moins une fente est située au niveau d'une jonction entre une portion plus longue (90a) et une portion plus courte (90b).

5. Une presse à balles rondes selon n'importe quelle revendication précédente, dans laquelle la largeur W_{C} du rideau (90) est W_{C} = C.W où C est compris dans la plage de 0,7 à 1,0 et W est une largeur de la chambre à balle.

6. Une presse à balles rondes selon n'importe quelle revendication précédente, dans laquelle l'au moins un élément de commande comprend en plus un élément conditionneur (100) qui est configuré pour mettre en prise la languette (T) tandis que l'élément de dispositif d'alimentation (52, 53) se déplace vers l'ouverture d'alimentation (58).

7. Une presse à balles rondes selon la revendication 6, dans laquelle l'élément conditionneur (100) comprend un élément conditionneur flexible (111) qui met en prise le matériau de liage entre le dispositif de coupe (26) et le dispositif d'alimentation (50) dans la position rétractée, dans laquelle l'élément conditionneur flexible (111) est configuré pour commander le déplacement de la languette (T) vers le dispositif d'alimentation (50) lorsque le matériau de liage est coupé.

8. Une presse à balles rondes selon la revendication 7, dans laquelle l'élément conditionneur flexible (111) comprend un matériau souple.

9. Une presse à balles rondes selon n'importe quelle revendication précédente, dans laquelle l'au moins un élément de commande comprend en plus un élément de support souple (112) fixé au dispositif d'alimentation (50) entre les bords avant et arrière de celui-ci, qui est configuré pour mettre en prise un rouleau presseur (62) situé adjacent à l'ouverture d'alimentation (58) lorsque le dispositif d'alimentation (50) est dans la position d'alimentation.

10. Une presse à balles rondes selon la revendication 9, dans laquelle l'élément de support souple (112) est configuré pour presser le matériau de liage contre le rouleau presseur (62) lorsque le dispositif d'alimentation (50) est dans la position d'alimentation.

11. Une presse à balles rondes selon la revendication 10, dans laquelle l'élément de support souple (112) est configuré pour presser le rideau flexible (90) contre le rouleau presseur (62) lorsque le dispositif d'alimentation (50) est dans la position d'alimentation.

12. Une presse à balles rondes selon n'importe quelle revendication précédente, dans laquelle l'au moins un élément de commande comprend en plus une pièce de protection (110) qui entoure partiellement un rouleau presseur (62) situé adjacent et en dessous de l'ouverture d'alimentation (58), la pièce de protection (110) entoure au moins une partie inférieure externe de la circonférence du rouleau presseur (62).

13. Une presse à balles rondes selon la revendication 12, dans laquelle un bord supérieur de la pièce de protection (110) est situé entre la périphérie supérieure et l'axe de rotation du rouleau presseur (62).

14. Une presse à balles rondes selon n'importe quelle revendication précédente, dans laquelle le matériau de liage comprend un matériau de liage en film (F), l'appareil de liage (24) inclut un dispositif de mise en liasse qui est configuré pour enliasser le matériau de liage avant que le matériau de liage ne soit coupé, afin de former une languette (T) de matériau de liage en liasse, dans laquelle la languette (T) de matériau de liage en liasse a une largeur inférieure à la largeur du matériau de liage non en liasse.

15. Une presse à balles rondes selon n'importe quelle revendication précédente, dans laquelle le mécanisme d'alimentation (42) inclut un dispositif de tirage (44) qui est configuré pour extraire du matériau de liage d'un organe d'approvisionnement (32).
